# EUROPEAN PATENT APPLICATION

(11) **EP 4 760 528 A1**
(43) Date of publication of application: **17.06.2026**
(21) Application number: 24307109.9
(22) Date of filing: 13.12.2024
(51) Int. Cl.: G06F 16/28, G06F 16/901

(54) **EFFICIENT ADJACENCY MATRIX REPRESENTATION**

(71) Applicant: Dassault Systèmes, 78140 Vélizy-Villacoublay (FR)
(72) Inventor: VALLET GLENISSON, Eric, 78946 Vélizy-Villacoublay (FR); GARDE, Rémi, 78946 Vélizy-Villacoublay (FR); ROULLIER, Alban, 78946 Vélizy-Villacoublay (FR); SAHUT D'IZARN, Jean-Philippe, 78946 Vélizy-Villacoublay (FR)
(74) Representative: Bandpay & Greuter

(57) **Abstract**

The disclosure notably relates to a computer-implemented data structure representing an adjacency matrix associated with a predicate of a set of quads of an RDF graph database, wherein the adjacency matrix being partitioned into a grid of rectangular partitions, the partitions having a same dimension; the adjacency matrix comprising a set of adjacency sub-matrices, each adjacency sub-matrix corresponding to a respective partition of the adjacency matrix; each adjacency sub-matrix being identified by its respective position in the grid.

## Description

### TECHNICAL FIELD

The disclosure relates to the field of computer programs and systems, and more specifically to a computer-implemented data structure representing an adjacency matrix associated with a predicate of a set of quads of an RDF graph database.

### BACKGROUND

A number of solutions for database management are offered for application of the above design systems and programs in In-memory databases, i.e., purpose-built databases that rely primarily on memory for data storage, in contrast to databases that store data on disk or SSDs. Among such database management solutions, the solutions related to graph databases, for example RDF (Resource Description Framework) graph database, are of particular interest due to their great flexibility in data modeling and data storage.

RDF graphs are a traditional data model used for the storage and the retrieval of these graphs. The RDF specification has been published by the World Wide Web Consortium (W3C) to represent information as graphs; see for example RDF 1.1 Concepts and Abstract Syntax published here: https://www.w3.org/TR/rdf11-concepts/. The core structure of the abstract syntax used is a set of triples, each consisting of a subject, a predicate and an object. A set of such RDF triples is called an RDF graph. An RDF graph may be visualized as a node and a directed-arc diagram, in which each triple is represented as a node-arc-node link. As an example, an RDF triple may have two nodes, which are the subject and the object and an arc connecting them, which is the predicate. A graph label can be added to a RDF triple to obtain an RDF quad. More information about RDF can be found here: https://www.w3.org/TR/rdf11-concepts/#data-model.

RDF applications (e.g., Computer-Aided Design, Computer-aided Engineering, Computer-Aided Manufacturing, Product Lifecycle Management) usually require an important number of RDF quads to store and manipulate. RDF graphs have grown to billions of quads (e.g., Uniprot 100 billion of triples, Wikidata 17 billion of triples, 3DS SIEM up to 500 billion of triples), thus impacting on read and write performances and the total cost of ownership (TCO) of the storage. The TCO is the sum of all costs associated with owning and operating the storage over its entire lifecycle. This sum may include the initial costs, the implementation costs, operational costs and any end-of-life costs. The TCO may provide an estimate of the long-term financial impacts of a storage strategy.

There exist different strategies for RDF data storage: triple table, vertical partitioning and property table (i.e., grouping triples by property).

RDF graph data are best represented with vertical partitioning and adjacency matrices. Vertical partitioning is a technique used to organize and manage large RDF datasets by dividing them based on predicates. This means that all RDF quads with the same predicate are grouped together. An adjacency matrix represents a set of RDF quads. For RDF quads, an adjacency matrix can be a three-dimensional matrix where the first dimension represents the subject, the second dimension represents the object, the third dimension represents the predicate. The value in each cell (i.e., in each of its matrix elements) indicates the presence or absence of a relationship. A graph name may be included as an additional layer or annotation. An adjacency matrix associated with a predicate is therefore a two-dimensional matrix where the first dimension represents the subject and the second dimension represents the object of a set of RDF quad sharing the same predicate.

Moreover, RDF graph data can be stored in a compressed representation. The standard for lossless graph compression is k2-tree. However, k2-tree compression is optimized for its read-only version. Therefore, it remains the limitation that write performances are not well-optimized.

Furthermore, the vertical partitioning with compressed graph representation (be it k2-tree or another compression standard known in the art) comes with another drawback. In fact, when using a compressed graph representation for an adjacency matrix associated with a predicate, it is necessary to load in memory the full adjacency matrix in order to be able to read it and/or to query it and/or to modify it, e.g., write on and/or updating the data storage. Therefore, when the size of the adjacency matrix exceeds the memory available in the system or when the memory cost of loading it makes it unusable and not convenient, the adjacency matrix cannot be read and/or queried and/or modified. Using compression schemes more optimized is only possible for read-only versions.

Within this context, there is still a need for an improved data structure representing an adjacency matrix associated with a predicate of a set of quads of an RDF graph database.

### SUMMARY

It is therefore provided a computer-implemented data structure representing an adjacency matrix associated with a predicate of a set of quads of an RDF graph database, wherein:
- the adjacency matrix being partitioned into a grid of rectangular partitions, the partitions having a same dimension;
- the adjacency matrix comprising a set of adjacency sub-matrices, each adjacency sub-matrix corresponding to a respective partition of the adjacency matrix;
- each adjacency sub-matrix being identified by its respective position in the grid.

The computer-implemented data structure may comprise one or more of the following:
- the respective position in the grid of each identified adjacency sub-matrix is given by:
   -- at least one row, covered by the adjacency sub-matrix, in the adjacency matrix, the at least one row corresponding to a first index attributed to a subject of a quad of the RDF graph database; and
   -- at least one column, covered by the adjacency sub-matrix, in the adjacency matrix, the at least one column corresponding to a second index attributed to an object of a quad of the RDF graph database;
   and wherein the first index having a size of *N₁* bits and the second index having a size of *N₂* bits with *N₁* and *N₂* being positive integer numbers;
- the first index comprises a first part corresponding to a value of the most significant bits of the subject of the quad of the RDF graph database and a second part corresponding to a value of the remaining bits of the subject of the quad of the RDF graph database; the second index comprises a first part corresponding to a value of the most significant bits of the object of the quad of the RDF graph database and a second part corresponding to a value of the remaining bits of the of the object of the quad of the RDF graph database;
- the first part of the first index comprises a datatype of the subject, and the first part of the second index comprises a datatype of the object; the second part of the first index comprises coordinates of a row in an adjacency sub-matrix, and the second part of the second index comprises coordinates of a column in an adjacency sub-matrix;
- the first part of the first index and/or the first part of the second index are encoded by using a Morton encoding, thereby obtaining a Morton box identifying the adjacency sub-matrix;
- the adjacency sub-matrices store the quads of the RDF graph database in a compressed graph representation;
- if a partition comprises a number of quads larger than a predetermined number of quads, then an adjacency sub-matrix corresponds to the partition; if a partition comprises a number of quads smaller than the predetermined number of quads, then the quads of the partition are stored in an additional data structure.

It is further provided a computer-implemented method for filtering the data structure, comprising:
- providing a row, respectively a column, of an adjacency matrix;
- providing a function ScanRow, respectively a function ScanColumn, configured to output respective coordinates of cells of a given row, respectively a given column, in a given adjacency sub-matrix, the coordinates of the cells being relative to the given adjacency sub-matrix, a cell representing a quad of the RDF graph database;
- identifying the partitions of the grid that contain the provided row, respectively column, of the adjacency matrix;
- identifying the adjacency sub-matrices corresponding to the identified partitions;
- executing the function ScanRow, respectively ScanColumn, on the provided row, respectively column, of each of the identified adjacency sub-matrices;
- computing the coordinates of the cells relative to the adjacency matrix from the outputted coordinates of the cells relative to each identified adjacency sub-matrix; and
- outputting the computed coordinates of the cells relative to the adjacency matrix.

The method for filtering the data structure may comprise one or more of the following:
- the data structure further comprises: if a partition comprises a number of quads larger than a predetermined number of quads, then an adjacency sub-matrix corresponds to the partition; if a partition comprises a number of quads smaller than the predetermined number of quads, then the quads of the partition are stored in an additional data structure; and the method further comprises:
   -- executing the function ScanRow, respectively ScanColumn, on the additional data structure; and
   -- combining the results obtained by executing the function ScanRow, respectively ScanColumn, on the additional data structure and the results obtained by executing the function ScanRow, respectively ScanColumn, on the provided row, respectively column, of each of the identified adjacency sub-matrices.

It is further provided a computer-implemented method for scanning the data structure, comprising:
- providing an adjacency matrix comprising a set of adjacency sub-matrices;
- providing a function ScanAII configured to output respective coordinates of cells in a given adjacency sub-matrix, the coordinates of the cells being relative to the given adjacency sub-matrix, a cell representing a quad of the RDF graph database;
- executing the function ScanAII on the set of adjacency sub-matrices;
- computing the coordinates of the cells relative to the adjacency matrix from the outputted coordinates of the cells relative to the set of adjacency sub-matrices; and
- outputting the computed coordinates of cells relative to the provided adjacency matrix.

The method for scanning the data structure may comprise one or more of the following:
- the data structure further comprises: if a partition comprises a number of quads larger than a predetermined number of quads, then an adjacency sub-matrix corresponds to the partition; if a partition comprises a number of quads smaller than the predetermined number of quads, then the quads of the partition are stored in an additional data structure; and the method further comprises:
   -- executing the function ScanAII on the additional data structure; and
   -- combining the results obtained by executing the function ScanAII on the additional data structure and the results obtained by executing the function ScanAII on the set of adjacency sub-matrices.

It is further provided a computer-implemented method for updating the data structure, comprising:
- providing a row and a column, thereby providing a cell in a given adjacency sub-matrix, the cell representing a quad of the RDF graph database;
- providing a function Set, respectively Reset, configured to set the value of a cell to a first specified value, respectively to a second specified value;
-executing the function Set, respectively Reset, on the provided cell;
-identifying the partition of the grid that contains the provided cell;
-identifying the adjacency sub-matrix corresponding to the identified partition; and
-updating the identified adjacency sub-matrix.

The method for updating the data structure may comprise one or more of the following:
- the data structure further comprises: if a partition comprises a number of quads larger than a predetermined number of quads, then an adjacency sub-matrix corresponds to the partition; if a partition comprises a number of quads smaller than the predetermined number of quads, then the quads of the partition are stored in an additional data structure; and the method further comprises:
   • executing the function Set, respectively Reset, on the additional data structure; and
   • combining the results obtained by executing the function Set, respectively Reset, on the additional data structure and the results obtained by executing the function Set, respectively Reset, on the provided cell.

It is further provided a computer program comprising instructions which, when the program is executed by a processing unit, cause the computer to perform the method for filtering the data structure and/or the method for scanning the data structure and/or the method for updating the data structure.

It is further provided a computer readable storage medium having recorded thereon the computer program.

It is further provided a system comprising a processor coupled to a memory, the memory having recorded thereon a storage for RDF graph comprising the computer-implemented data structure and/or the computer program and/or a dictionary encoding one or more entities of the RDF quads, preferably each encoded entity being represented by only one index of the dictionary, more preferably the dictionary being an append-only dictionary and storing sequentially the indexes.

### BRIEF DESCRIPTION OF THE DRAWINGS

Non-limiting examples will now be described in reference to the accompanying drawings, where:
- FIG. 1 shows a schematic representation of an example of data structure;
- FIG. 2 shows a flowchart of an example of the filtering method;
- FIG. 3 shows a flowchart of an example of the scanning method;
- FIG. 4 shows a flowchart of an example of the updating method;
- FIG. 5 shows an example of the system;
- FIG. 6 shows an example of an RDF graph;
- FIG. 7 shows an example of vertical partitioning of an RDF graph; and
- FIG. 8 shows an example of the representation of an adjacency matrix partitioned in a grid of partitions.

### DETAILED DESCRIPTION

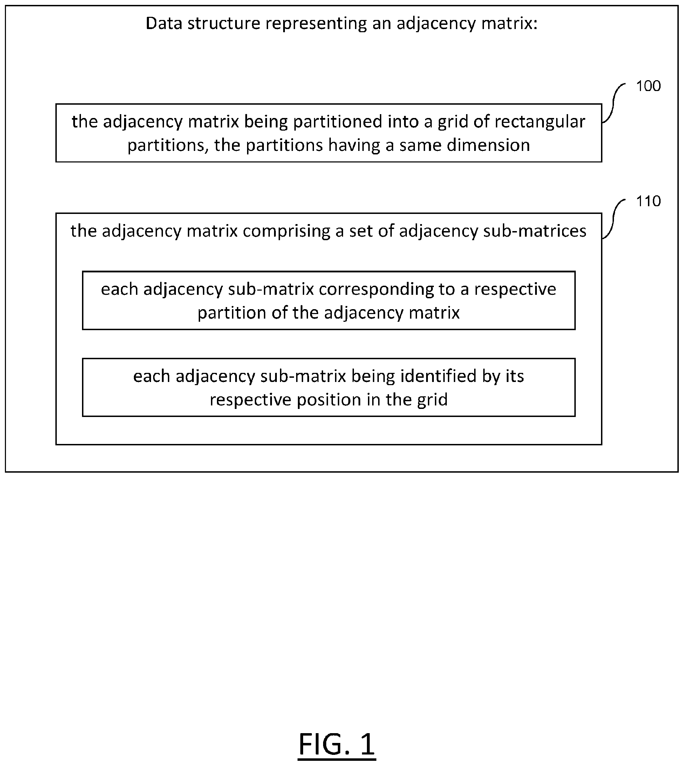

With reference to FIG. 1, it is proposed a computer-implemented data structure representing an adjacency matrix associated with a predicate of a set of quads of an RDF graph database. The adjacency matrix is partitioned into a grid of rectangular partitions. The partitions have a same dimension. The adjacency matrix comprises a set of adjacency sub-matrices. Each adjacency sub-matrix corresponds to a respective partition of the adjacency matrix. Each adjacency sub-matrix is identified by its respective position in the grid.

Such a method improves the space-efficient representation of RDF graphs, represented as adjacency matrices, that scales to very large matrices without the need to load all the content of the adjacency matrices in memory to perform read and/or write query operations on the adjacency matrices.

Notably, the data structure, representing an adjacency matrix, features a grid of rectangular partitions of same dimensions. Such a feature provides an efficient representation of large adjacency matrices, i.e., containing trillions of RDF quads as discussed in the background. With the data structure of the present disclosure, a large adjacency matrix does not need to be entirely loaded in memory to be read and/or written, thus improving read, write and query performances and reducing the total cost of ownership (TCO) of the storage. The data structure of the present disclosure, therefore, is relevant for industrial applications, e.g., in the context of big data storage, Computer-Aided Design, Computer-aided Engineering, Computer-Aided Manufacturing, Product Lifecycle Management.

A data structure comprises a data organization and storage format for efficiently organizing and storing data. Therefore, data structures are used to optimize access and modifications to data.

A database is any collection of data (i.e., information) organized for search and retrieval. It is designed to handle large volume of data and allows for efficient storage, retrieval and manipulation. When stored on a memory, the database allows a rapid search and retrieval by a computer.

As known in the art, RDF graph data are best represented with vertical partitioning and adjacency matrices. Vertical partitioning is a technique used to organize and manage large RDF datasets by dividing them based on predicates. This means that all RDF quads with the same predicate are grouped together.

An adjacency matrix may be a square matrix. For RDF quads, an adjacency matrix may be a three-dimensional matrix where the first dimension may represent the subject of the RDF quad, the second dimension may represent the object of the RDF quad, the third dimension may represent the predicate of the RDF quad, the value in each cell may indicate the presence or absence of a relationship. The graph name may be included as an additional layer or annotation. An adjacency matrix associated with a predicate may be, therefore, a two-dimensional matrix where the first dimension (e.g., the row) represents the subject of the RDF quad and the second dimension (e.g., the column) represents the object of the RDF quad.

The adjacency matrix of the present disclosure is partitioned into a grid of rectangular partitions. A partition of a data structure is a smaller part of the said data structure. A partition may be created by the operation of partitioning, i.e., dividing, the data structure according to a certain criterion. Partitioning improves write and read performances, because these operations scan less amount of data. Partitioning, moreover, guarantees a more efficient use of resources, thus optimizing the total cost of ownership.

The partitions have the same dimensions, i.e., the adjacency matrix may be regularly partitioned (i.e., divided) into a grid of rectangular partitions of same dimensions. A rectangular partition may have a same dimension of the type (*i*,*j*), where *i* > 0 may be the number of rows and *j* > 0 may be the number of columns. A rectangular partition may be a square partition, i.e., the numbers of rows and columns may be the same (i.e., *i = j*)*.* In a practical implementation, a square partition may have *i* = *j* = 2*ⁿ* with *n* is a natural integer, e.g. *n* equals to 0, 1, 2,... The number of rows and the number of columns may be represented by a power-of-two. In examples, the exponent of the power-of-two may be *n* = 16.

The adjacency matrix comprises a set of adjacency sub-matrices. Each of such adjacency sub-matrices corresponds to a respective partition (e.g., a rectangular partition and/or a square partition) of the adjacency matrix. Each adjacency sub-matrix is identified by its respective position in the grid. In other words, each adjacency sub-matrix may be (e.g., uniquely) associated with its respective position in the grid.

The respective position in the grid of each adjacency sub-matrix may be given by at least one row, covered by the adjacency sub-matrix, in the adjacency matrix and by at least one column covered by the adjacency sub-matrix, in the adjacency matrix. In other words, the respective position in the grid of each adjacency sub-matrix may be identified by at least one row and at least one column of the adjacency matrix covered by the said adjacency sub-matrix.

In examples, the respective position of an (e.g., each) adjacency sub-matrix within the adjacency matrix may be defined by the index of the starting row and by the index of the starting column of the adjacency sub-matrix within the adjacency matrix.

In examples, the at least one row corresponds to a first index attributed to a subject of a quad of the RDF graph database. The at least one column corresponds to a second index attributed to an object of a quad of the RDF graph database. The first index may have (i.e., may be represented by) a size of *N₁* bits and the second index may have (i.e., may be represented by) a size of *N₂* bits, where both *N₁* and *N₂* are positive integer numbers. In a practical implementation of these examples, the first and second indices may both contain 48 bits, i.e., *N*₁ *= N*₂ = 48. Other implementations are possible, e.g., *N*₁ = *N*₂ = 64.

Therefore, the respective position in the grid of each adjacency sub-matrix may be encoded using at least one row and at least one column. In turn, the at least one row and the at least one column of a quad may be encoded, respectively, using a first index attributed to a subject of a quad and a second index attributed to an object of a quad. In other words, each adjacency sub-matrix may be identified by at least one subject and at least one object of a quad of the RDF graph database.

The first index *N₁* may comprise a first part which corresponds to a value of the most significant bits of (the said first index attributed to) the subject of the quad of the RDF graph database and a second part which corresponds to a value of the remaining bits of (the said first index attributed to) the subject of the quad of the RDF graph database.

Likewise, the second index *N₂* may comprise a first part which corresponds to a value of the most significant bits of (the said second index attributed to) the object of the quad of the RDF graph database and a second part which corresponds to a value of the remaining bits of (the said second index attributed to) the object of the quad of the RDF graph database.

The first part of the first index, which corresponds to the value of the most significant bits of (the said first index attributed to) the subject of the quad of the RDF graph database, may comprise an RDF datatype of the subject. The first part of the second index, which corresponds to the value of the most significant bits of (the said second index attributed to) the object of the quad of the RDF graph database, may comprise an RDF datatype of the object. This kind of information is encoded in higher (i.e., more relevant or more significant) bits to ensure that indices of the same datatype are well localized in memory. Such feature improves read performances (e.g., scanning a same datatype) and allows filtering operations on datatypes by indices. Moreover, such a feature amounts to increasing locality of quads with subjects and objects of the same type within a given adjacency sub-matrix.

The second part of the first index, corresponding to the value of the remaining bits of (the said first index attributed to) the subject, may comprise the coordinates of a row in an adjacency sub-matrix. The second part of the second index, corresponding to a value of the remaining bits of (the said second index attributed to) the object, may comprise the coordinates of a column in an adjacency sub-matrix.

The first part of the first index and/or the first part of the second index may be encoded by using a Morton encoding. In other words, the value of the most significant bits of the subject and/or the value of the most significant bits of the object may be encoded by using a Morton encoding scheme.

Morton encoding is also known as Z-order curve. Morton encoding is a compression scheme used on multidimensional data like matrices, as known in the art. The Z-value of a point in multidimensions is calculated by interleaving the binary representations of its coordinate values. For example, by applying the Morton encoding for the triple (RDF tuple) "1, 2, 3", the binary representation reads as "001, 010, 011". By interleaving the binary representation of its coordinate values, one takes the first bit of each number, then the second bit of each number and finally the third bit of each number, thus obtaining, respectively, "000, 011, 101". Combining these three interleaved binary numbers together leads to 000011101 which is 29 in base 10. Thus, the Morton encoded value for the triple "1, 2, 3" is 29. More information about Morton encoding can be found here: https://en.wikipedia.org/wiki/Z-order_curve.

Morton encoding preserves the locality of the data and, therefore, improves significantly scanning and reading performances.

Going back to the adjacency sub-matrices, the adjacency sub-matrices may store the quads of the RDF graph database in a compressed graph representation.

A compressed graph representation is employed to store graph data (e.g., an RDF dataset) more efficiently by reducing the amount of space required while maintaining the ability to perform queries and operations effectively. Examples of compressed graph representations are k2-tree, dk2-tree and XAM-tree. These representations may use vertical partitioning (i.e., the partitions of the RDF dataset per predicate) to obtain disjoint subsets of subject-object pairs for each predicate, each subset containing sparse elements which are efficiently compressed.

The compressed graph representation amounts to a space-efficient data representation of the graph data. A space-efficient data representation also improves the scalability of the database. Moreover, a compressed graph representation improves performances of various operations, among them (but not limited to) read, update and query operations. Overall, a compressed graph representation contributes to reduce costs of storage and management, i.e., it reduces the total cost of ownership (also known as TCO), and to efficiently transfer data over the network of the distributed database.

The data structure, representing an adjacency matrix, is partitioned into a grid of rectangular partitions having a same dimension. A partition may store a number of quads. In order to attain a good trade-off between memory and read costs, an additional data structure may be created. The creation of the additional data structure avoids wasting resources to create and build (i.e., to store quads on) adjacency sub-matrices containing only a few quads. In other words, creating adjacency sub-matrices implies creating, e.g., a XAM tree just for a few quads. Operations and functions on the data structure may also be performed on the additional data structure.

In examples, if a partition comprises a number of quads larger than a predetermined number of quads (e.g., 10 or 15 or 20 quads), then an adjacency sub-matrix may corresponds to the partition. In other words, if a partition comprises a number of quads larger than a predetermined number of quads, then an adjacency sub-matrix may be created (e.g., creating a compressed graph representation of an adjacency sub-matrix containing the quads of the partition) and the created adjacency sub-matrix may corresponds to (i.e., may be associated with) the respective partition of the adjacency matrix.

However, if a partition comprises a number of quads smaller than the predetermined number of quads, then the quads of the partition are stored in an additional data structure. In other words, if a partition comprises a number of quads smaller than the predetermined number of quads, then the quads stored in said partition may be stored in an additional data structure. In this case, no adjacency sub-matrix is created. An additional data structure may be any data structure adapted to store a limited number of quads. In examples, an additional data structure may be a list or a dictionary or a graph library.

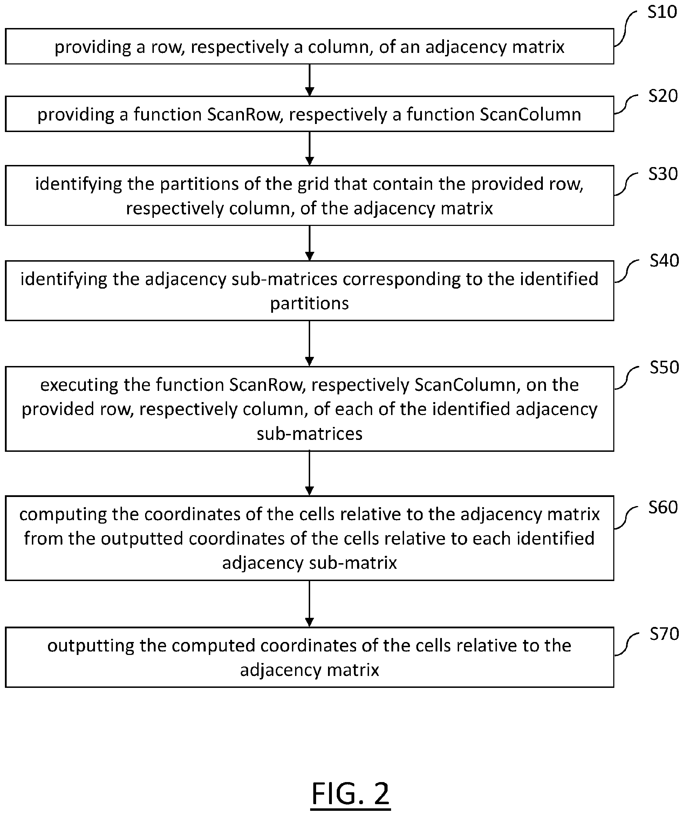

With reference to the flowchart of FIG. 2, it is proposed a computer-implemented method for filtering the data structure, hereafter referred to as the "filtering method".

The filtering method comprises providing S10 (i.e., obtaining) a row, respectively a column, of an adjacency matrix. The providing of a row, respectively a column, may comprise providing the coordinates of a row, respectively a column, in an adjacency sub-matrix, i.e., providing the second part of the first index attributed to a subject, respectively the second part of the second index attributed to an object.

The filtering method also comprises providing S20 a function ScanRow, respectively a function ScanColumn, configured to output respective coordinates of cells (e.g., non-empty cells) of a given row, respectively a given column, in a given adjacency sub-matrix. The coordinates of the cells (i.e., the matrix elements) are relative to the given adjacency sub-matrix. A cell represents a quad of the RDF graph database.

The filtering method moreover comprises identifying S30 the partitions of the grid that contain the provided row, respectively column, of the adjacency matrix. The provided row, respectively column, of the adjacency matrix may belong to one or more partitions of the grid of rectangular partitions of same dimensions.

The filtering method further comprises identifying S40 the adjacency sub-matrices corresponding to the identified partitions (of the adjacency matrix). Each identified adjacency sub-matrix is identified by its respective position in the grid.

The filtering method comprises executing S50 the provided function ScanRow, respectively ScanColumn, on the provided row, respectively column, of each of the identified adjacency sub-matrices. The provided ScanRow, respectively ScanColumn, may take as input the provided row, respectively column and may output the respective coordinates of cells (e.g., non-empty cell, i.e., those cells containing "1" or "true") of the provided row, respectively the provided column, in each of the identified adjacency sub-matrices. The outputted coordinates of cells are relative to the each of the identified adjacency sub-matrices.

The filtering method also comprises computing S60 the coordinates of the cells relative to the adjacency matrix from the outputted coordinates of the cells relative to each identified adjacency sub-matrix. The computing of the coordinates of the cells relative to the adjacency matrix from the outputted coordinates of the cells relative to each identified adjacency sub-matrix may comprise a change of coordinates from each identified adjacency sub-matrix to the adjacency matrix.

The filtering method moreover comprises outputting S70 the computed coordinates of the cells (e.g., the non-empty cells) relative to the adjacency matrix.

Such filtering method takes advantage of the grid of partitions of the adjacency matrix (i.e., of the data structure) and of the respective position of each identified adjacency sub-matrix (each corresponding to an identified partition) to prevent loading in memory the full adjacency matrix. The filtering method, therefore, amounts to a significant improvement for filtering (i.e., selecting and/or filtrate) the RDF quads stored in the data structure of the present disclosure. In particular, the filtering method provides a time-saving and memory-saving method for computing the coordinates of cells (relative to the full adjacency matrix) from a provided row, respectively column, of the full adjacency matrix without the need to upload in memory the full adjacency matrix.

The filtering method may comprise the filtering of the data structure and of the additional data structure, if it has been created as described above. Functions and operations on the data structure may also be performed on the additional data structure. The additional data structure may store quads of the identified partitions containing less than a predetermined number of quads (e.g., 10 or 15 or 20 quads).

In the presence of an additional data structure, the filtering method may further comprise executing the function ScanRow, respectively ScanColumn, on the additional data structure and combining the results obtained by executing the function ScanRow, respectively ScanColumn, on the additional data structure and the results obtained by executing the function ScanRow, respectively ScanColumn, on the provided row, respectively column, of each of the obtained adjacency sub-matrices.

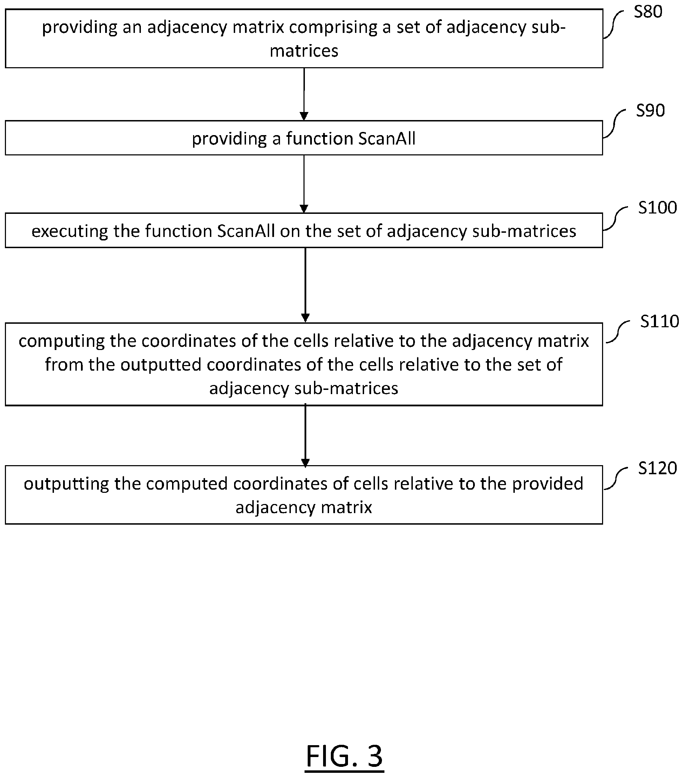

With reference to the flowchart of FIG. 3, it is proposed a computer-implemented method for scanning the data structure, hereafter referred as the "scanning method".

The scanning method comprises providing S80 (i.e., obtaining) an adjacency matrix comprising a set of adjacency sub-matrices and providing S90 a function ScanAII configured to output respective coordinates of cells in a given adjacency sub-matrix, wherein the coordinates of the cells are relative to the given adjacency sub-matrix. The coordinates of the cells (i.e., the matrix elements) are relative to the given adjacency sub-matrix. A cell represents a quad of the RDF graph database.

The scanning method comprises executing S100 the function ScanAII on the set of adjacency sub-matrices. The provided ScanAII may take as input an adjacency sub-matrices and may output the respective coordinates of cells (e.g., non-empty cells) of the provided adjacency sub-matrix. The outputted coordinates of cells are relative to the given adjacency sub-matrix of the set of adjacency sub-matrices.

The scanning method also comprises computing S110 the coordinates of the cells relative to the adjacency matrix from the outputted coordinates of the cells relative to the set of adjacency sub-matrices. The computing of the coordinates of the cells relative to the adjacency matrix from the outputted coordinates of the cells relative to the set of adjacency sub-matrices may comprise a change of coordinates from each adjacency sub-matrix to the adjacency matrix.

The scanning method moreover comprises outputting S120 the computed coordinates of the cells (e.g., the non-empty cells) relative to the provided adjacency matrix.

Such scanning method improves the scan performances on large adjacency matrices by exploiting the grid of partitions of the data structure. In particular, the scanning method amounts to fast and efficient retrieval of the coordinates of cells (e.g., the non-empty cells) from a provided adjacency matrix without the need to lead in memory the full adjacency matrix.

The scanning method may comprise the scanning of the data structure and of the additional data structure, if has been created as described above. Functions and operations on the data structure may also be performed on the additional data structure. The additional data structure may store quads of the partitions containing less than a predetermined number of quads (e.g., 10 or 15 or 20 quads).

In the presence of an additional data structure, the scanning method may further comprise executing the function ScanAII on the additional data structure and combining the results obtained by executing the function ScanAII on the additional data structure and the results obtained by executing the function ScanAII on the set of adjacency sub-matrices.

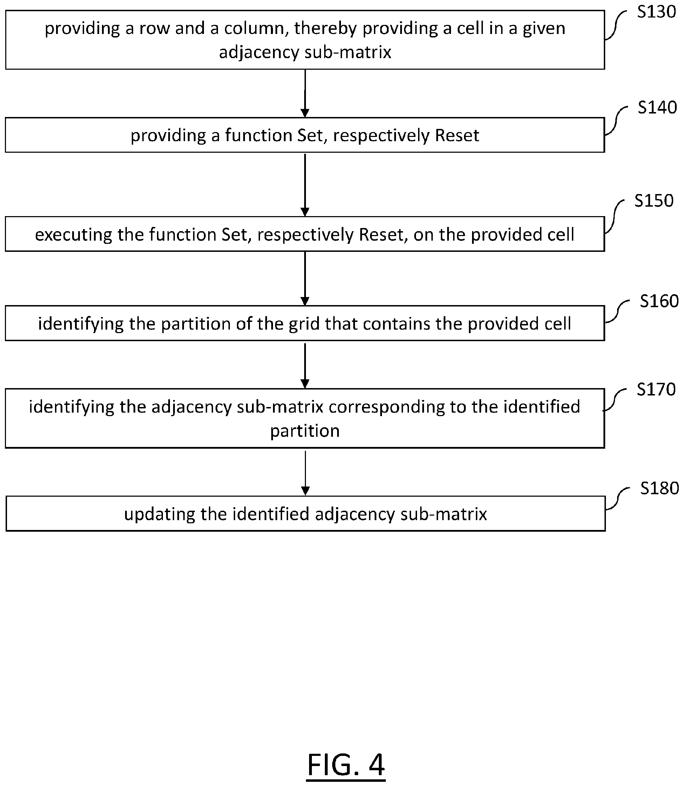

With reference to the flowchart of FIG. 4, it is proposed a computer-implemented method for updating the data structure, hereafter referred as the "updating method".

The updating method comprises providing S130 a row and a column, thereby providing a cell in a given adjacency sub-matrix and providing S140 a function Set, respectively Reset, configured to set the value of a cell to a first specified value, respectively to a second specified value. The provided cell (i.e., the provided elements of the given adjacency sub-matrix) represents a quad of the RDF graph database. The first specified value and the second specified value may be a binary value, e.g., the first specified value may be "true" (e.g., "1") and/or the second specified value may be "false" (e.g., "0").

The updating method also comprises executing S150 the function Set, respectively Reset, on the provided cell. The provided function Set, respectively Reset, may take as input the provided row and the provided column (i.e., the provided cell) of a given adjacency sub-matrix, and may set the value of the provided cell to a first specified value, respectively to a second specified value. The provided function Set, respectively Rest, may update the provided cell to a first specified value, respectively to a second specified value.

The updating method moreover comprises identifying S160 the partition of the grid that contains the provided cell and identifying S170 the adjacency sub-matrix corresponding to the identified partition.

The updating method comprises updating S180 the identified adjacency sub-matrix. The updating of the identified adjacency sub-matrix may comprise updating the value of the provided cell in the identified adjacency sub-matrix.

Such updating method allows to write and updates the value of any cell in the adjacency matrix by providing a cell in a given adjacency sub-matrix. The updating method, as well the other methods discussed earlier, amounts to an efficient method in terms of resources and costs of storage. The updating method achieves the minimization of the database workload by exploiting the grid of partitions (and the corresponding set of adjacency sub-matrices) of the data structure.

The updating method may comprise the updating of the data structure and of the additional data structure, if has been created as described above. Functions and operations on the data structure may also be performed on the additional data structure. The additional data structure may store quads of the identified partitions containing less than a predetermined number of quads (e.g., 10 or 15 or 20).

In the presence of an additional data structure, the updating method may further comprise executing the function Set, respectively Reset, on the additional data structure and combining the results obtained by executing the function ScanRow, respectively ScanColumn, on the additional data structure and the results obtained by executing the function Set, respectively Reset, on the provided cell.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions, that, when executed by a processing unit, cause the computer to perform any of the methods of the present disclosure. The memory may also store the data structure of the present disclosure, the additional data structure and a dictionary encoding one or more entities of the RDF quads. Preferably each encoded entity may be represented by only one index of the dictionary, more preferably the dictionary may be an append-only dictionary and may store sequentially the indexes, further more preferably the entries and indexes of the dictionary may be stored in the first and/or second non-graph databases. The memory is any hardware adapted for such storage, possibly comprising several physical distinct parts (e.g. one for the program, and possibly one for the database).

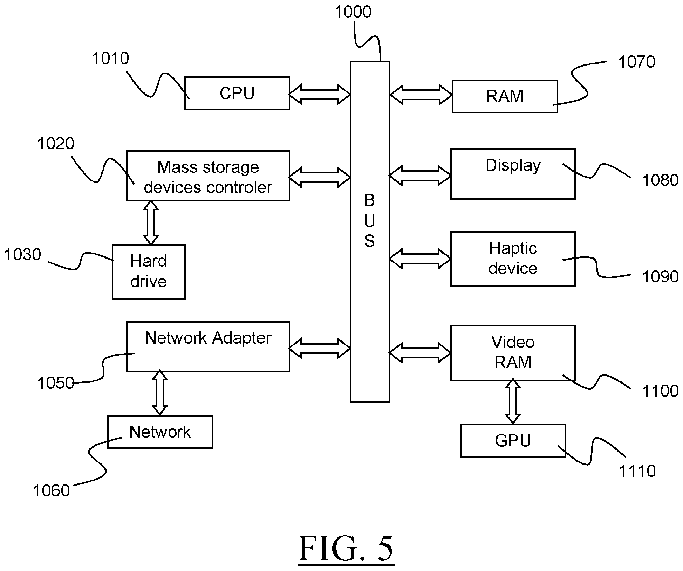

FIG. 5 shows an example of the system, wherein the system is a client computer system, e.g. a workstation of a user. The system can be used for building, maintaining, storing, using the data structure, and/or the system can be used for performing the methods of the present disclosure.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform any of the methods of the present disclosure. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Methods steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Examples of implementations of the present disclosure are now discussed.

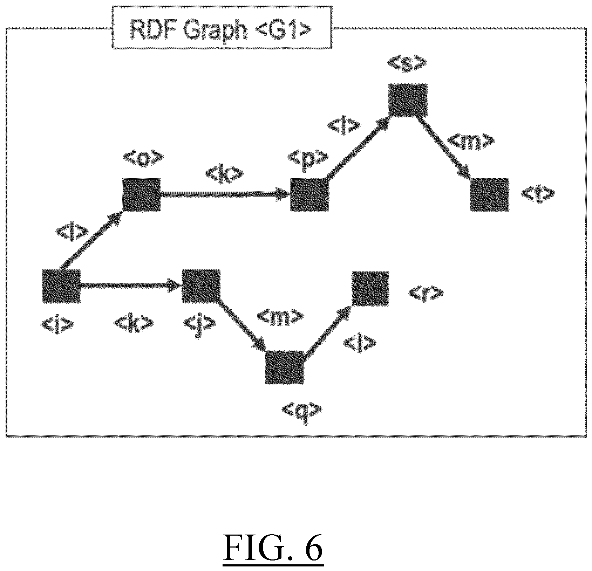

As known in the art, an RDF graph may be represented as in FIG. 6. An RDF graph is a set of triples. Each triple may comprise a subject, a predicate and an object. The subject may represent the resource that is described, the object may represent the value or resource that is related to the subject, the predicate may represent the relationship between the subject and the object. In the example given in FIG. 6, for instance, <k>, <l>, <m> are predicates.

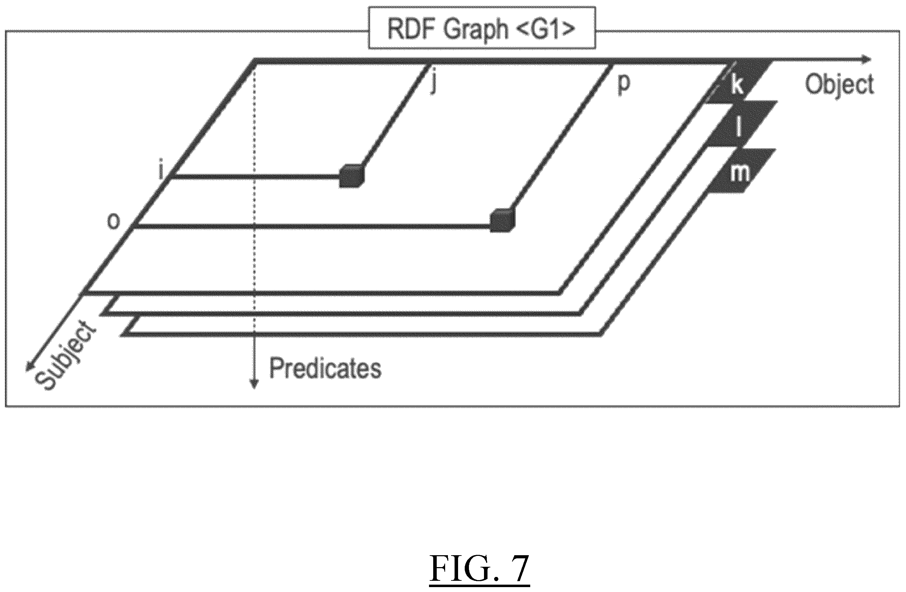

FIG. 7 shows an example of vertical partitioning (i.e., partitioning of an RDF graph per predicates) applied to the RDF graph of FIG. 6. The representation of an RDF graph may be a list of adjacency matrices, one per predicate. Each adjacency matrix may be a 2-dimensional matrix and may be labelled by the respective predicate. In FIG. 7, for instance, three 2-dimensional adjacency matrices are represented: the first one being associated to the predicate <k>, the second one being associate to the predicate <l>, and the third one being associate to the predicate <m>. Each adjacency matrix stores the triple as an edge between the subject and the object. The creation and the implementation of the adjacency matrix may comprise creating a compressed graph representation, e.g. dynamic k2-tree as in the state of the art, or a XAMTree as described in European Patent Application No. EP 22306928.7, which is incorporated by reference in this respect. The European Patent Application No. EP 22306928.7 teaches a computer-implemented method of storing RDF graph data in a graph database comprising a set of RDF tuples, the method comprising:
- obtaining one or more adjacency matrices, each adjacency matrix representing a group of tuples of the graph database comprising a same predicate; and
- storing, for each of the one or more adjacency matrices, a data structure comprising an array (NV), the array comprising:
   -- one or more indices each pointing to a sub-division of the adjacency matrix, and/or
   -- one or more elements each representing a group of tuples of the RDF graph database of a respective sub-division of the adjacency matrix.

The XAMTree method of storing RDF graph data in a graph database and its technical advantages are notably discussed on page 6, line 28 to page 7, line 2 which is incorporated by reference in this respect. Further examples of the XAMTree method are discussed in the appended claims of the European Patent Application No. EP 22306928.7.

In industrial applications where an adjacency matrix stores trillion of triples (i.e., for large adjacency matrix), storing the adjacency matrix in memory is unpractical and/or the cost to load it all in memory and/or the cost to perform functions and operation on it can become too high. One possibility to overcome these drawbacks is to improve the representation of large adjacency matrices.

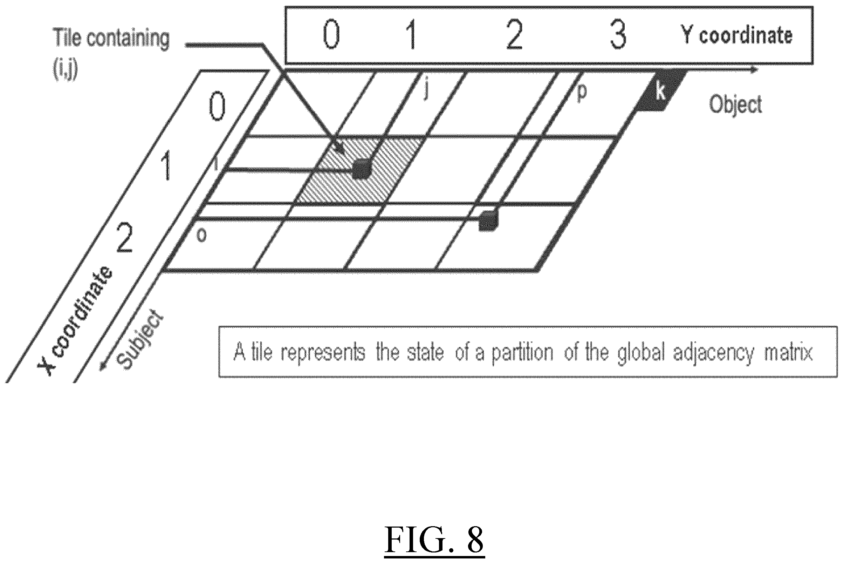

With reference to FIG. 8, it is shown an example of the representation of an adjacency matrix partitioned in a grid of partitions (sometimes also referred to as tiles).

Each partition may correspond to an adjacency sub-matrix by using a graph compressed representation, e.g., a XAMTree or a dynamic K2-Tree. Each adjacency sub-matrix may comprise 2¹⁶ subjects and 2¹⁶ objects. The full adjacency matrix (i.e., the adjacency matrix partitioned in a grid of partitions of same dimensions and comprising a set of adjacency sub-matrices) may contain up to 2⁴⁸ × 2⁴⁸ triples. Therefore, an adjacency matrix may represent up to 2⁹⁶ triples for each predicate.

In order to speed up the access to the adjacency sub-matrices, the adjacency sub-matrices may be indexed by 32 (high-order) bits indices attributed to the subjects and the objects, preferably encoded using a Morton box. To further speed up the access to the adjacency sub-matrices, the adjacency sub-matrices may be further indexed by higher number of bits to represent additional identified, such as the bounding box of the adjacency sub-matrix, e.g., the first and last values of the indices attributed to the subjects and the objects stored in the adjacency matrix.

Therefore, the representation of the adjacency matrix into a grid of rectangular partitions (and to corresponding adjacency sub-matrices) allows to load in memory only the needed adjacency sub-matrices and/or to unload from memory previously accessed adjacency sub-matrices to reduce the memory pressure.

An adjacency matrix may be implemented by a data structure similar to dk2-tree or XAMTree. The coordinates of a triple stored in the adjacency matrix represented by the data structure may be denoted by "r" for row and "c" for column.

A set of functions may access the content of the adjacency matrix. It is now provided a list of functions:
• Set(r,c), that sets the bit at the (r, c) coordinate to "true";
• Reset(r,c), that resets the bit at the (r,c) coordinate to "false";
• Test(r,c), that returns the Boolean state of the bit at the (r,c) coordinate;
• Observer functions, which may be implemented as iterators https://en.wikipedia.org/wiki/Iterator or as visitors https://en.wikipedia.org/wiki/Visitor_pattern, as defined in the following:
   ∘ ScanRow(r), that returns the set of column {c} where Test(r,c) is "true". ScanRow may also return the set of rows and columns {r,c} where the row "r" is an invariant;
   ∘ ScanColumn(c), that returns the set of rows {r} where Test(r,c) is "true". ScanColumn may also return the set of rows and columns {r,c} where the column "c" is an invariant;
   ∘ ScanAll(), that returns the set of row and column {r,c} where Test(r,c) is "true".

The indices of rows and columns may be encoded according to any encoding scheme known in the art. In examples, it is preferred a compression scheme which maps multidimensional data to one dimension while preserving locality of the data points. Such choice may be the Morton encoding, which provides the best performances. Indeed, the Morton encoding, also named Z-order curve (https://en.wikipedia.org/wiki/Z-order_curve), is the encoding scheme that explores a bitmap by proximity, it maps multidimensional data to one dimension while preserving locality, and its performances are due to its constant complexity and the ability to use specific Intel processor instructions to optimize it (PDEP and PEXT: Parallel bits deposit, Parallel bits extract). However, other encoding schemes may be implemented and used in the disclosed data structure.

An adjacency matrix may be recursively subdivided into rectangular or square regions called partitions. Within an adjacency matrix, a triple may be identified by the index attributed to its subject and the index attributed its object, which respectively may correspond to its row and column in the adjacency matrix. A partition may corresponds to an adjacency sub-matrix, which may be identified by the first row and the first column that it covers in the adjacency matrix.

In an example of implementation, adjacency sub-matrices may have a size expressed by a power of 2. For example, if the size of a partition and/or the corresponding adjacency sub-matrix is of the form 2*ⁿ ×* 2*ⁿ,* then the partition and/or the corresponding adjacency sub-matrix containing a quad may be identified by discarding the last *n* bits (i.e., considering the most relevant bits) of the index attributed to the row and the index attributed to the column, and the relative position of the quad within the partition and/or the corresponding adjacency sub-matrix may be given by the last *n* bits of the index attributed to the row and the last *N* bits of the index attributed to the column.

In an example of implementation, choosing a size of 2¹⁶ *×* 2¹⁶ for the partitions and/or the adjacency sub-matrices allows for a reasonable trade-off between the size of individual adjacency sub-matrices and the set of adjacency sub-matrices needed to represent the adjacency matrix.

Moreover, the indices attributed to the subjects and the objects may be represented by indices of, e.g., 48 bits. Different representation are possible, e.g., with indices of 64 bits or 128 bits.

With a representation of 48 bits, the most significant bits (e.g., the first 16 bits) may contain information about generalization of the RDF datatype of the subject and/or the object of the quad, such as RDF langtag, URI and RDF blank node. This information are encoded in "higher" bits to ensure that indices of the same types have good locality to improve scanning performances. In fact, quads of the same type are often scanned at the same time. This choice enables trivial type filtering based on the index.

The remaining 32 (i.e., 48-16) bits are the less significant. They may identify subjects/objects with a given RDF datatype. The number of less significant bits may be bigger to represent more identifiers at the cost of more memory usage. However, 2^32 distinct identifiers are enough to represent up to 10^12 triples.

In an example of implementation with 48 bit indices and with adjacency sub-matrices of a size of 2¹⁶ *×* 2¹⁶, the position of a quad within the adjacency sub-matrix may be represented by the last 16 bits of its subject index and the last 16 bits of its object index.

The adjacency sub-matrices containing the quad may be represented by the first 32 bits of its subject index and the first 32 bits of its object index. In such an implementation, the two 32-bit indices may be encoded into a single 64-bit index with the Morton encoding scheme. The 64-bit index may be called the Morton box of the adjacency sub-matrix (and/or its corresponding partition).

Using the Morton encoding scheme for identifying the partitions and/or the adjacency sub-matrices is not necessary. Indeed, any encoding, for example concatenating the two 32-bit indices may be sufficient. However, using the Morton encoding scheme significantly improves scanning efficiency by scanning partitions and/or the adjacency sub-matrices in the order of their Morton box (also known as their Z-order), which improves the locality of the scanned indices.

The partitions may be themselves smaller adjacency matrices (e.g., adjacency sub-matrices), whose row and columns fit into 16 bits. They may be binary objects and may be stored on different memory storages, for example in files on the file system or as blobs (binary large objects) in a database. The binary representation of the adjacency sub-matrices may be implemented using a memory map to avoid the cost of deserialization from the stored representation to the memory layout of the adjacency sub-matrices. Any of these choices may be made without changing the data structure of the present disclosure. For example, adjacency sub-matrices may be any representation of data structures such as dk2-trees, k2-trees or XAMtrees. It may be also possible to have different representations for different adjacency sub-matrices, depending, for example, on the number of quads stored within the adjacency sub-matrices, for better compactness.

To reduce the cost of memory usage and of fetching from a disk or a database, partitions and/or adjacency sub-matrices may be fetched opportunistically only when needed. For example, if the memory usage becomes too high, unused partitions and/or adjacency sub-matrices may be removed from the memory.

The size of the adjacency sub-matrices may not necessarily be of the type of power-of-two. Choosing another power-of-two size would simply change the number of bits that identify an adjacency sub-matrix and the number of bits that identify a quad within an adjacency sub-matrices. A non-power-of-two size could be possible, but it would be less efficient to determine which adjacency sub-matrix a quad belongs to, as this would require divisions and modulo operations rather than just truncating some bits. It is only necessary that all adjacency sub-matrices for a given predicate have the same size.

Additionally, to avoid creating and managing adjacency sub-matrices for regions that have very few quads, an additional structure may be created. The additional structure may store all quads that belong to adjacency sub-matrices contains a number of quads less than a predetermined number of quads. An adjacency sub-matrix may be created once enough quads are stored into the corresponding partitions. "Enough quads" means a predetermined number of quads, e.g., 16 quads or 20 quads.

The creation of an additional data structure amounts to a trade-off between the memory gain of creating a XAMTree for too few quads (i.e., less than the predetermined number of quads), and the read cost of such an additional structure. Functions and operations on the data structure may also be performed on the additional data structure.

In examples, the indices attributed to each subject and object of a quad may comprise optional metadata. Optional metadata improves the performances of functions and operations, e.g., scan operations. Optional metadata may comprise the number of quads stored in a partition and/or in an adjacency sub-matrix. Such an optional metadata may be used to easily compute the total size of the partition and/or the adjacency sub-matrix, which is an useful metadata for a SPARQL query optimizer. Optional metadata may also comprise a bounding box for a partition and/or an adjacency sub-matrix. A bounding box may comprise minimum and maximum values of indices attributed to a subject/object in this partition and/or an adjacency sub-matrix (e.g., each index being a 16-bit index) to optimize scan operations by evicting early tiles that are not relevant.

In an example of an implementation, an adjacency matrix for a given pair of graph-predicate and containing a set of subject-object pairs may be created using, e.g., an algorithm as it follows.

The algorithm may obtain an SQL table (named graphTile), which has the as primary keys, e.g., graph ID, predicate, tile ID, and a blob value (named am64k). The algorithm may also obtain at least one implementation of an in memory version of a serializable adjacency matrix, that support the functions that shall be described afterward in the description. This implementation may work with a graph compressed representation such as XAMTree or dk2 or Morton encoded delta list. The serialized blob can be compressed (e.g., Iz4/snappy ...) without changing the disclosed data structure.

The algorithm may comprises the transformation of the set of subject-object pairs in a map of sets, wherein the key of the map may be constituted of 32 upper bits of the index attributed to the subject and of 32 upper bits of the index attributed to the object, and the key in each set may be constituted of 16 lower bits of the index attributed to the subject and of 16 lower bits of the index attributed to the object.

The algorithm may also comprise, for each key of the map:
• creating an adjacency matrix, for example in memory;
• filling the adjacency matrix with the content of the set associated to the key;
• saving the adjacency matrix into a blob; and
• updating and/or inserting a row in the graphTile table using the given graph ID, predicate and blob.

As discussed earlier, the data structure (as well as the additional data structure, if created) of the present disclosure may implement a set of functions and operations that may be used to answer SPARQL queries. For the sake of example, a list of functions with corresponding description is given below:

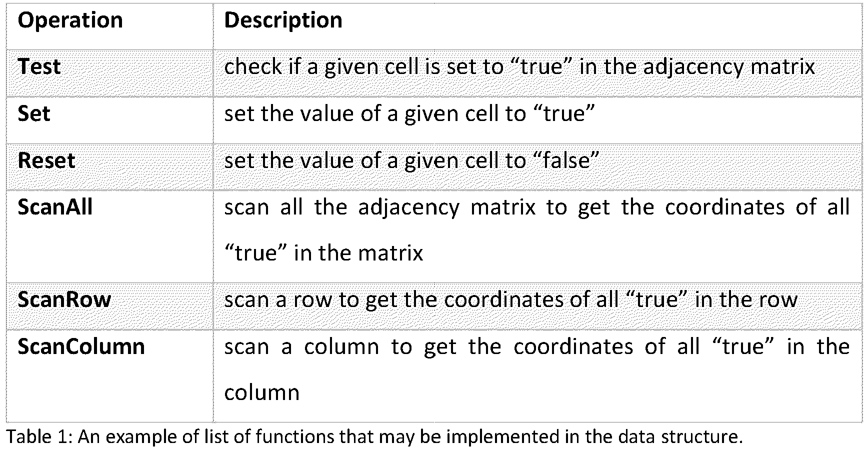

It is now discussed an example of implementation of the functions in Table 1. *Algorithm for the Function "Test"*

In this case, graph ID, predicate, subject and object indices may be provided. The function "Test" may comprise:
• computing a tile ID from the provided subject and the provided object;
• retrieving from the graphTile table a row matching the graph ID, predicate, and tile ID, thereby outputting the blob am64k;
• If a blob am64k is found:
   ∘ uncompressing the blob am64k into an adjacency matrix, e.g., in memory; and
   ∘ returning the result of Test(subject's 16 lowest bits, object's 16 lowest bits) on the adjacency matrix; and
• Else, if no blob is found:
   ∘ if using the additional data structure, executing Test(subject, object) on it and return the result; and
   ∘ else, returning false.

It is noteworthy that this example of implementation may "cache" the fetched blob in memory matrix to prevent database cost.

### Algorithm for the Function "Set"

In this case, graph ID, predicate, subject and object indices may be provided. The function "Set" may comprise:
• computing a tile ID from the provided subject and the provided object;
• retrieving from the graphTile table a row matching the graph ID, predicate and tile ID, thereby outputting the blob am64k;
• If a blob am64k is found:
   ∘ creating an (e.g., in memory) adjacency matrix;
   ∘ uncompressing the blob am64k into the adjacency matrix;
   ∘ executing Set(subject's 16 lowest bits, object's 16 lowest bits) on the adjacency matrix;
   ∘ saving the adjacency matrix into a new blob; and
   ∘ updating or inserting the row in the graphTile table using the provided graph ID, predicate and tile ID and the new blob;
• Else, if no blob is found (i.e., there is no tile associate to the tile ID):
   ∘ if using an additional data structure, execute Set(subject, object) on it and update it in the table;
   ∘ Else go back to the previous step "if a blob am64 is found".

Some remarks are here in order. First of all, this example of implementation may "cache" the fetched blob in memory matrix to prevent database cost. Second, if the bit is already set, the step of updating the graphTile is not necessary. Third, to prevent huge computation (e.g., huge load/save operations) and minimize database workload, this example implementation may add a new column to the graphTile table, which contains a delta file of the in memory adjacency matrix, the delta file may be merged to the blob am64k when the former exceeds a predefined size (e.g., 100 MB). A persistent version of XAMTree may avoid the recomputing done by the merge.

### Algorithm for the Function "Reset"

In this case, graph ID, predicate, subject and object indices may be provided. The function "Reset" may comprise:
• computing a tile ID from the provided subject and the provided object;
• retrieving from the graphTile table a row matching the graph ID, predicate and tile ID, thereby outputting the blob am64k;
• If a blob am64k is found:
   ∘ creating an (e.g., in memory) adjacency matrix;
   ∘ uncompressing the blob am64k into the adjacency matrix;
   ∘ executing Reset(subject's 16 lowest bits, object's 16 lowest bits) on the adjacency matrix;
      1. if the adjacency matrix is empty, delete the row in the graphTile table using the provided graph ID, predicate and tile ID;
      2. if the adjacency matrix is not empty:
         i. save the adjacency matrix into a new blob; and
         ii. update or insert the row in the graphTile table using the provided graph ID, predicate and tile ID and the new blob It no blob is found:
• Else, if no blob is found (i.e., there is no tile associate to the tile ID):
   ∘ if using an additional data structure, execute Delete(subject, object) to the additional data structure.

Some remarks are here in order. First of all, this example of implementation may "cache" the fetched blob in memory matrix to prevent database cost. Second, if the bit is already set, the step of updating the graphTile is not necessary. Third, to prevent huge computation (e.g., huge load/save operations) and minimize database workload, this example implementation may add a new column to the table graphTile, which contains a delta file of the in memory adjacency matrix, the delta file may be merged to the blob am64k when the former exceeds a predefined size (e.g., 100 MB). A persistent version of XAMTree may avoid the recomputing done by the merge.

### Algorithm for the Function "ScanAll"

In this case, a graph ID and a predicate indices may be provided. The function "ScanAll" may comprise:
• retrieving all blob am64k and tile ID rows from the graphTile table row tile matching the provided graph ID and the predicate;
• for each retrieved blob am64k and tile ID:
   ∘ creating an (e.g., in memory) adjacency matrix;
   ∘ uncompressing the blob am64k into the adjacency matrix;
   ∘ executing ScanAII on the adjacency matrix and combining tile ID with the returned subject-object of the adjacency matrix
• If using an additional data structure, execute "ScanAll" on it and combine the results.

It is noteworthy that this example of implementation may "cache" the fetched blob in memory matrix to prevent database cost.

### Algorithm for the Function "ScanRow"

In this case, graph ID, predicate and subject indices may be provided. The function "ScanRow" may comprise:
• retrieving all blob am64k and tile ID rows from graphTile table row tile matching the provided graph ID, the predicate and the subject;
• for each retrieved blob am64k and tile ID:
   ∘ creating an (e.g., in memory) adjacency matrix;
   ∘ uncompressing the blob am64k into the adjacency matrix;
   ∘ executing ScanRow(16 lowest bits of subject)on the adjacency matrix and combining tile ID with the returned subject-object of the adjacency matrix
• If using an additional data structure, execute scanRow on it and combine the results

It is noteworthy that this example of implementation may "cache" the fetched blob in memory matrix to prevent database cost.

### Algorithm for the Function "ScanColumn"

In this case, graph ID, predicate and object indices may be provided. The function "ScanColumn" may comprise:
• retrieving all blob am64k and tile ID rows from graphTile table row tile matching the provided graph ID, the predicate and the object;
• for each retrieved blob am64k and tile ID:
   ∘ creating an (e.g., in memory) adjacency matrix;
   ∘ uncompressing the blob am64k into the adjacency matrix;
   ∘ executing ScanRow(16 lowest bits of object)on the adjacency matrix and combining tile ID with the returned subject-object of the adjacency matrix;
• If using an additional data structure, also apply ScanColumn on it and combine the results.

It is noteworthy that this example of implementation may "cache" the fetched blob in memory matrix to prevent database cost.

It is quite easy to implement efficient adjacency matrix operations on sets (e.g., union, intersection, subtraction) because these operations may be applied tile by tile. These operations on sets may be used to optimize for example join operations in a SPARQL query engine.

## Claims

1. A computer-implemented data structure representing an adjacency matrix associated with a predicate of a set of quads of an RDF graph database, wherein:
- the adjacency matrix (100) being partitioned into a grid of rectangular partitions, the partitions having a same dimension;
- the adjacency matrix (100) comprising a set of adjacency sub-matrices, each adjacency sub-matrix (110) corresponding to a respective partition of the adjacency matrix;
- each adjacency sub-matrix (110) being identified by its respective position in the grid.

2. The computer-implemented data structure of claim 1, wherein the respective position in the grid of each identified adjacency sub-matrix is given by:
- at least one row, covered by the adjacency sub-matrix, in the adjacency matrix, the at least one row corresponding to a first index attributed to a subject of a quad of the RDF graph database; and
- at least one column, covered by the adjacency sub-matrix, in the adjacency matrix, the at least one column corresponding to a second index attributed to an object of a quad of the RDF graph database;
and wherein the first index having a size of *N₁* bits and the second index having a size of *N₂* bits with *N₁* and *N₂* being positive integer numbers.

3. The computer-implemented data structure of claim 2, wherein:
- the first index comprises a first part corresponding to a value of the most significant bits of the subject of the quad of the RDF graph database and a second part corresponding to a value of the remaining bits of the subject of the quad of the RDF graph database;
- the second index comprises a first part corresponding to a value of the most significant bits of the object of the quad of the RDF graph database and a second part corresponding to a value of the remaining bits of the of the object of the quad of the RDF graph database.

4. The computer-implemented data structure of claim 3, wherein:
- the first part of the first index comprises a datatype of the subject, and the first part of the second index comprises a datatype of the object; and
- the second part of the first index comprises coordinates of a row in an adjacency sub-matrix, and the second part of the second index comprises coordinates of a column in an adjacency sub-matrix.

5. The computer-implemented data structure of claim 3 or 4, wherein the first part of the first index and/or the first part of the second index are encoded by using a Morton encoding, thereby obtaining a Morton box identifying the adjacency sub-matrix.

6. The computer-implemented data structure of any one of claims 1 to 5, wherein the adjacency sub-matrices store the quads of the RDF graph database in a compressed graph representation.

7. The computer-implemented data structure of any one of claims 1 to 6, wherein:
- if a partition comprises a number of quads larger than a predetermined number of quads, then an adjacency sub-matrix corresponds to the partition;
- if a partition comprises a number of quads smaller than the predetermined number of quads, then the quads of the partition are stored in an additional data structure.

8. A computer-implemented method for filtering the data structure of any one of claims 1 to 6, comprising:
- providing (S10) a row, respectively a column, of an adjacency matrix;
- providing (S20) a function ScanRow, respectively a function ScanColumn, configured to output respective coordinates of cells of a given row, respectively a given column, in a given adjacency sub-matrix, the coordinates of the cells being relative to the given adjacency sub-matrix, a cell representing a quad of the RDF graph database;
- identifying (S30) the partitions of the grid that contain the provided row, respectively column, of the adjacency matrix;
- identifying (S40) the adjacency sub-matrices corresponding to the identified partitions;
- executing (S50) the function ScanRow, respectively ScanColumn, on the provided row, respectively column, of each of the identified adjacency sub-matrices;
- computing (S60) the coordinates of the cells relative to the adjacency matrix from the outputted coordinates of the cells relative to each identified adjacency sub-matrix; and
- outputting (S70) the computed coordinates of the cells relative to the adjacency matrix.

9. The computer-implemented method of claim 8, wherein the data structure further comprises:
- if a partition comprises a number of quads larger than a predetermined number of quads, then an adjacency sub-matrix corresponds to the partition;
- if a partition comprises a number of quads smaller than the predetermined number of quads, then the quads of the partition are stored in an additional data structure; and
the method further comprising:
--executing the function ScanRow, respectively ScanColumn, on the additional data structure; and
--combining the results obtained by executing the function ScanRow, respectively ScanColumn, on the additional data structure and the results obtained by executing the function ScanRow, respectively ScanColumn, on the provided row, respectively column, of each of the identified adjacency sub-matrices.

10. A computer-implemented method for scanning the data structure of any one of claims 1 to 6, comprising:
- providing (S80) an adjacency matrix comprising a set of adjacency sub-matrices;
- providing (S90) a function ScanAII configured to output respective coordinates of cells in a given adjacency sub-matrix, the coordinates of the cells being relative to the given adjacency sub-matrix, a cell representing a quad of the RDF graph database;
- executing (S100) the function ScanAII on the set of adjacency sub-matrices;
- computing (S110) the coordinates of the cells relative to the adjacency matrix from the outputted coordinates of the cells relative to the set of adjacency sub-matrices; and
- outputting (S120) the computed coordinates of cells relative to the provided adjacency matrix.

11. The computer-implemented method of claim 10, wherein the data structure further comprises:
- if a partition comprises a number of quads larger than a predetermined number of quads, then an adjacency sub-matrix corresponds to the partition;
- if a partition comprises a number of quads smaller than the predetermined number of quads, then the quads of the partition are stored in an additional data structure; and
the method further comprising:
--executing the function ScanAII on the additional data structure; and
--combining the results obtained by executing the function ScanAII on the additional data structure and the results obtained by executing the function ScanAII on the set of adjacency sub-matrices.

12. A computer-implemented method for updating the data structure of any one of claims 1 to 6, comprising:
- providing (S130) a row and a column, thereby providing a cell in a given adjacency sub-matrix, the cell representing a quad of the RDF graph database;
- providing (S140) a function Set, respectively Reset, configured to set the value of a cell to a first specified value, respectively to a second specified value;
-executing (S150) the function Set, respectively Reset, on the provided cell;
-identifying (S160) the partition of the grid that contains the provided cell;
-identifying (S170) the adjacency sub-matrix corresponding to the identified partition; and
-updating (S180) the identified adjacency sub-matrix.

13. The computer-implemented method of claim 12, wherein the data structure further comprises:
- if a partition comprises a number of quads larger than a predetermined number of quads, then an adjacency sub-matrix corresponds to the partition;
- if a partition comprises a number of quads smaller than the predetermined number of quads, then the quads of the partition are stored in an additional data structure; and
the method further comprising:
--executing the function Set, respectively Reset, on the additional data structure; and
-- combining the results obtained by executing the function Set, respectively Reset, on the additional data structure and the results obtained by executing the function Set, respectively Reset, on the provided cell.

14. A computer program comprising instructions which, when the program is executed by a processing unit, cause the computer to perform the method of anyone of claims 8 to 9 and/or the method of anyone of claims 10 to 11 and/or the method of anyone of claims 12 to 13.

15. A system comprising a processor coupled to a memory, the memory having recorded thereon the data structure of any one of claims 1 to 7 and/or the computer program of claim 14.
